# EUROPÄISCHE PATENTSCHRIFT

(11) **EP 1 812 728 B1**
(45) Veröffentlichungstag und Bekanntmachung des Hinweises auf die Patenterteilung: **10.09.2014**
(21) Anmeldenummer: 05804477.7
(22) Anmeldetag: 25.10.2005
(51) Int. Cl.: F16F 15/123

(54) **DREHMOMENTÜBERTRAGUNGSEINRICHTUNG**
TORQUE TRANSMISSION DEVICE
DISPOSITIF DE TRANSMISSION DE COUPLE DE ROTATION

(30) Priorität: 13.11.2004 DE 102004054992
(43) Veröffentlichungstag der Anmeldung: 01.08.2007
(73) Patentinhaber: Schaeffler Technologies GmbH & Co. KG, 91074 Herzogenaurach (DE)
(72) Erfinder: LENGRAIS, Guillaume, F-67000 Strassburg (FR)
(86) Internationale Anmeldenummer: PCT/DE2005/001902
(87) Internationale Veröffentlichungsnummer: WO 2006/050687

(56) Entgegenhaltungen:
- DE-A1- 2 610 081
- DE-A1- 3 429 229
- DE-A1- 3 618 471
- DE-A1- 3 806 013
- DE-A1- 3 832 950
- DE-A1- 19 910 919
- FR-A- 2 361 574
- GB-A- 1 200 013
- GB-A- 2 148 812
- JP-A- S 591 815
- PATENT ABSTRACTS OF JAPAN Bd. 006, Nr. 020 (M-110), 5. Februar 1982 (1982-02-05) & JP 56 138545 A (DAIKIN MFG CO LTD), 29. Oktober 1981 (1981-10-29)

## Beschreibung

Die Erfindung betrifft eine Drehmomentübertragungseinrichtung mit zwei zueinander verdrehbaren Elementen, zwischen denen ein zumindest Energiespeicher aufweisender Dämpfer vorgesehen ist, wobei die Elemente Beaufschlagungsbereiche aufweisen, mittels derer die Energiespeicher bei einer Relatiwerdrehung der Elemente aus einer winkelmäßigen Ausgangsposition komprimierbar sind.

Derartige Drehmomentübertragungseinrichtungen sind beispielsweise durch die JP 56-138545 A, die FR 2 361 574 A, die DE 26 10 081 A1, die DE 36 18 471 A1, die GB 1 200 013 A, die GB 2 184 812 A, die DE 199 10 919 A1 und die JP 59-001815 A bekannt geworden.

Weitere Drehmomentübertragungseinrichtungen sind beispielsweise durch die DE 39 09 892 A1, die DE 39 01 454 A1, die DE 37 21 705 A1 und die DE 37 21 712 A1 bekannt geworden. Bei den in diesem Stand der Technik beschriebenen Drehmomentübertragungseinrichtungen handelt es sich um so genannte Zweimassenschwungräder, die mindestens zwei Trägheitsmassen besitzen, welche relativ zueinander gelagert und entgegen der Wirkung von Schraubenfedern und Reibeinrichtungen verdrehbar sind. Die verwendeten Schraubenfedern besitzen dabei vorzugsweise ein großes Längen-Durchmesser-Verhältnis.

Bezüglich des prinzipiellen Aufbaus und der Wirkungsweise derartiger Drehmomentübertragungseinrichtungen wird auf diesen Stand der Technik ausdrücklich verwiesen, so dass in der vorliegenden Anmeldung hierauf nicht näher eingegangen wird.

Bei solchen Drehmomentübertragungseinrichtungen besteht das Problem, dass zumindest bei Übertragung von geringen Drehmomenten, was beispielsweise der Fall ist, wenn die Motor-Getriebe-Einheit des Kraftfahrzeuges sich im Leerlauf befindet (also kein Getriebegang eingelegt ist), ein instabiler schwingungsmäßiger Betriebszustand im Antriebspfad zwischen Motor und Getriebe entstehen kann. Dieser instabile Betriebszustand bewirkt, zumindest bei Vorhandensein bestimmter Bedingungen, niedrigfrequente Schwingungen zwischen den beiden zueinander verdrehbaren Elementen. Diese Schwingungen können Klapper- bzw. Rasselgeräusche im Bereich des Getriebes und/oder des Zweimassenschwungrades verursachen. Die Anregung derartiger Schwingungen kann unter anderem durch Zuschalten von Zusatzaggregaten, wie beispielsweise der Klimaanlage, und/oder durch Einschalten der Scheinwerfer an geregt werden. Dies ist darauf zurückzuführen, dass durch das Zuschalten von zusätzlichen Verbrauchern die Belastung des Motors zunimmt.

Der vorliegenden Erfindung lag die Aufgabe zugrunde, die vorerwähnten Nachteile zu beseitigen bzw. zumindest zu reduzieren, indem das Schwingungsverhalten der Drehmomentübertragungseinrichtung entsprechend beeinflusst wird.

Die vorerwähnte Aufgabe wird bei einer Drehmomentübertragungseinrichtung der eingangs beschriebenen Art dadurch gelöst, dass Dämpfungsmittel zwischen den beiden Elemente vorhanden sind, die unmittelbar bei einer von einer winkelmäßigen Ausgangsposition erfolgenden Relativverdrehung der Elemente in wenigstens einem der beiden möglichen Relativverdrehsinne der Elemente eine Dämpfung erzeugen, welche nur über einen Teilbereich des in dem entsprechenden Relativverdrehsinn durch die Energiespeicher ermöglichten Verdrehwinkels wirksam ist, wobei die Dämpfungsmittel mit einem der Elemente verbunden sind und mit dem Beaufschlagungsbereich des anderen Elementes zusammenwirken. Dadurch kann gewährleistet werden, dass zum Beispiel in dem erwähnten Leerlaufbetrieb der Motor-Getriebe-Einheit die Schwingungsbewegungen der normalerweise zwischen den Enden zweier benachbarter Schraubenfedern schwingenden Beaufschlagungsbereiche eines der Elemente gedämpft werden. Dadurch kann verhindert werden, dass diese Beaufschlagungsbereiche und die damit verbundenen Bauteile bzw. Massen zwischen den enden dieser beiden komprimierbaren Schraubenfedern praktisch ungehindert hin- und her schwingen bzw. pendeln können. Durch einen derartigen Betriebszustand können durch Auftreffen der Beaufschlagungsbereiche auf die Federenden Geräusche entstehen. Durch die erfindungsgemäßen Dämpfungsmittel kann ein Aufschaukeln der Schwingungsbewegungen der Beaufschlagungsbereiche zwischen den beiden Federenden verhindert werden. Je nach Abstimmung der Dämpfungswirkung dieser Dämpfungsmittel kann gar erreicht werden, dass die Beaufschlagungsbereiche lediglich einen Schwingwinkel durchfahren, der kleiner ist als der winkelmäßige Abstand zwischen den beiden Federenden. Die Beaufschlagungsbereiche und die damit verbundenen Bauteile können dann also lediglich zwischen einem Federende und den Dämpfungsmitteln schwingen. Durch die erfindungsgemäßen Dämpfungsmittel wird also die kinetische Energie, welche beim Zurückprallen von einem Federende in die mit den Beaufschlagungsbereichen verbundene Masse gespeichert wird, verzehrt. Das Maß der Energievernichtung kann derart bemessen werden, dass ein Aufschaukeln der mit den entsprechenden Beaufschlagungsbereichen verbundenen Massen zwischen den beiden Federenden verhindert wird. Die Beaufschlagungsbereiche und die mit diesen verbundenen Teile werden also durch die Dämpfungsmittel abgebremst.

Die Dämpfungsmittel können zu den Energiespeichern parallel wirksam sein.

Die von den Dämpfungsmitteln erzeugte Bremswirkung, die beispielsweise durch Reibung erzeugt werden kann, liegt in vorteilhafter Weise in der Größenordnung von 4 bis 12 Nm, vorzugsweise in der Größenordnung von 6 bis 10 Nm. Der Winkel, über den diese Dämpfungsmittel wirksam sind, liegt vorzugsweise in der Größenordnung von 4 bis 20°, vorzugsweise in der Größenordnung von 8 bis 14°. Die vorerwähnten Werte sind lediglich als Beispiel angegeben, da diese abhängig sind von dem Motorverhalten und den angetriebenen Massen sowie der Steifigkeit der Federn.

In vorteilhafter Weise können die Dämpfungsmittel derart ausgebildet sein, dass bei einer Relativverdrehung zwischen den beiden Elementen aus der Ausgangsposition heraus die Dämpfungswirkung dieser Dämpfungsmittel abnimmt, was wiederum bedeutet, dass im Bereich der Ausgangsposition die Dämpfungswirkung der Dämpfungsmittel am größten ist und nach beiden Relativdrehsinnrichtungen dann abnimmt.

Weitere vorteilhafte, konstruktive und funktionelle Merkmale werden in Zusammenhang mit der nun folgenden Figurenbeschreibung näher erläutert.

Es zeigen:
- Figur 1: einen Schnitt durch eine Dämpfungseinrichtung,
- Figur 2: einen Schnitt gemäß der Linie II/II der Figur 1 durch eine der Figur 1 ähnliche Dämpfungseinrichtung,
- Figur 3: eine der Figur 2 ähnliche Darstellung und
- Fig. 4 bis 6: Prinzipskizzen anhand derer die Wirkungsweise der erfindungsgemäßen Mittel erläutert wird.

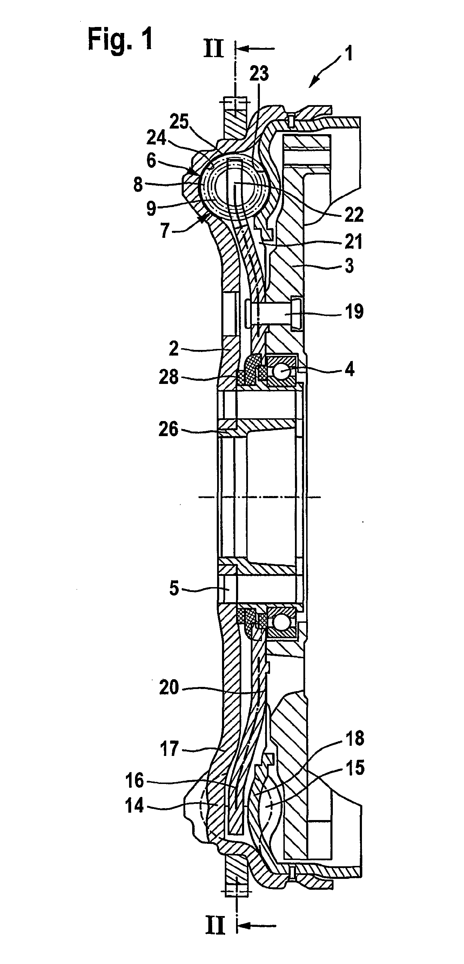

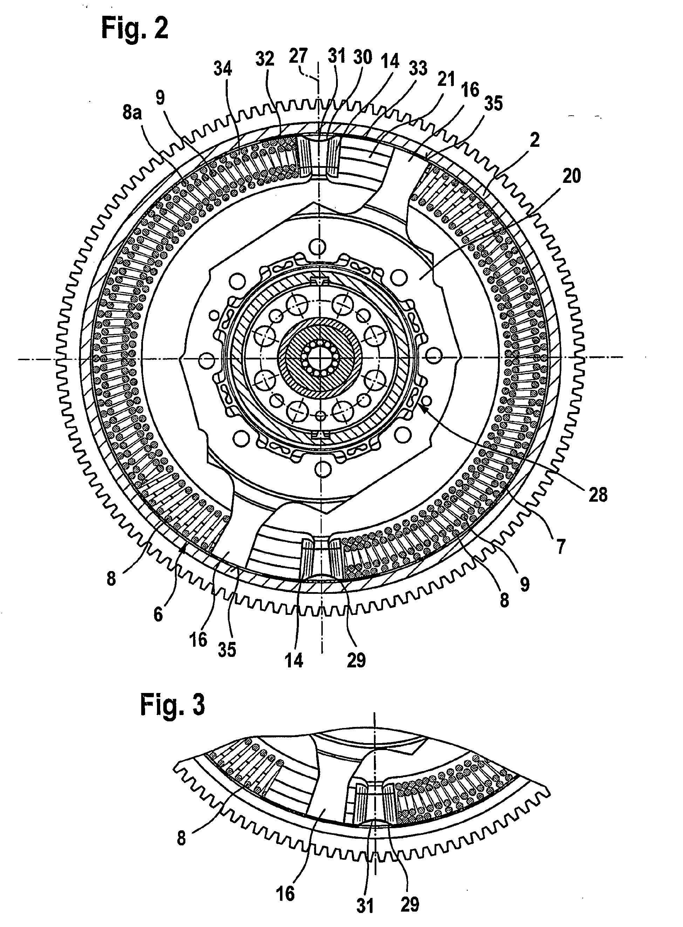

Der in den Figuren 1 und 2 teilweise dargestellte Drehschwingungsdämpfer bildet ein geteiltes Schwungrad 1, das eine an einer nicht gezeigten Abtriebswelle einer Brennkraftmaschine befestigbare erste oder Primärschwungmasse 2 sowie eine zweite oder Sekundärschwungmasse 3 aufweist. Auf der zweiten Schwungmasse 3 ist eine Reibungskupplung unter Zwischenlegung einer Kupplungsscheibe befestigbar, über die eine ebenfalls nicht dargestellte Eingangswelle eines Getriebes zu- und abkuppelbar ist. Die Schwungmassen 2 und 3 sind über eine Lagerung 4 zueinander verdrehbar gelagert, die bei dem dargestellten Ausführungsbeispiel radial außerhalb von Bohrungen 5 zur Durchführung von Befestigungsschrauben für die Montage der ersten Schwungmasse 2 an der Abtriebswelle einer Brennkraftmaschine angeordnet ist. Zwischen den beiden Schwungmassen 2 und 3 ist eine Dämpfungseinrichtung 6 wirksam, die Energiespeicher 7 umfasst, von denen zumindest einer durch Schraubendruckfedern 8,9 gebildet ist. Wie insbesondere aus Figur 2 ersichtlich ist, ist die Schraubendruckfeder 9 praktisch vollständig in dem durch die Windungen 8a der Feder 8 gebildeten Raum aufgenommen oder mit anderen Worten die beiden Schraubenfedern 8 und 9 sind über ihre Längserstreckung betrachtet im wesentlichen ineinander geschachtelt. Bei dem dargestellten Ausführungsbeispiel ist die in Umfangsrichtung betrachtete winkelmäßige Erstreckung bzw. Länge des in der Schraubenfeder 8 aufgenommenen Abschnittes der Schraubenfeder 9 geringer als die Erstreckung der äußeren Schraubenfeder 8.

Die beiden Schwungmassen 2 und 3 besitzen Beaufschlagungsbereiche 14,15 bzw. 16 für die Energiespeicher 7. Bei dem dargestellten Ausführungsbeispiel sind die Beaufschlagungsbereiche 14,15 durch in die die erste Schwungmasse 2 bildenden Blechteile 17,18 eingebrachte Anprägungen gebildet. Die axial zwischen den Beaufschlagungsbereichen 14,15 vorgesehenen Beaufschlagungsbereiche 16 sind durch zumindest ein mit der Sekundärschwungmasse 3, beispielsweise über Niete 19, verbundenes flanschartiges Beaufschlagungsbauteil 20 gebildet. Dieses Bauteil 20 dient als Drehmomentübertragungselement zwischen den Energiespeichern 7 und der Schwungmasse 3. Die Beaufschlagungsbereiche 16 sind durch am Außenumfang des flanschartigen Beaufschlagungsmittels 20 vorgesehene radiale Arme bzw. Ausleger 16 gebildet. Das durch Kaltumformung von Blechmaterial hergestellte Bauteil 17 dient zur Befestigung der ersten Schwungmasse 2 bzw. des gesamten geteilten Schwungrades 1 an der Abtriebswelle einer Brennkraftmaschine. Radial außen ist das Bauteil 17 mit dem ebenfalls aus Blech hergestellten Bauteil 18 verbunden. Die beiden Bauteile 17 und 18 bilden einen ringförmigen Raum 21, der einen torusartigen Bereich 22 aufweist. Der ringförmige Raum 21 bzw. der torusartige Bereich 22 ist zumindest teilweise mit einem viskosen Medium, wie beispielsweise Fett, gefüllt. In Umfangsrichtung betrachtet zwischen den Anformungen bzw. den Beaufschlagungsbereichen 14,15 bilden die Bauteile 17,18 Ausbuchtungen 23,24, die den ring- bzw. torusartigen Bereich 22 begrenzen und die Energiespeicher 7 aufnehmen, sowie hier sowohl in radialer als auch in axialer Richtung führen. Zumindest bei rotierender Einrichtung 1 stützen sich zumindest die Windungen der Federn 8 an den den torusartigen Bereich 22 radial außen begrenzenden Bereichen des Bauteiles 17 und/oder 18 ab. Bei dem dargestellten Ausführungsbeispiel ist ein durch wenigstens eine gehärtete Blechzwischenlage bzw. Blecheinlage gebildeter Verschleißschutz 25 vorgesehen, an dem sich zumindest die Federn 8 radial abstützen. Der Verschleißschutz 25 erstreckt sich in Umfangsrichtung in vorteilhafter Weise zumindest über die gesamte Länge bzw. Winkelerstreckung der entspannten Energiespeicher 7. Infolge der fliehkraftmäßigen Abstützung der Windungen zumindest der Federn 8 wird zwischen diesen Windungen und den mit diesen in Reibeingriff stehenden Bauteilen eine drehzahlabhängige Reibungsdämpfung bei einer Längenänderung bzw. Kompression der Energiespeicher 7 bzw. der Schraubenfedern 8 erzeugt.

Die Energiespeicher 7 können zumindest in radialer Richtung auch mittels Gleit- und/oder Rollschuhe geführt werden. Solche Mittel sind beispielsweise durch die DE 102 09 838 A1 und DE 102 41 879 A1 vorgeschlagen worden.

Radial innen trägt das sich radial erstreckende Bauteil 17 ein Zwischenteil bzw. eine Nabe 26, das bzw. die ein Lager, hier ein Kugellager 4, aufnimmt bzw. trägt. Das Lager 4 trägt auch die Schwungmasse 3.

Wie aus Figur 2 erkennbar ist, sind die Beaufschlagungsbereiche 16 winkelmäßig kleiner ausgebildet als die die entspannten Energiespeicher 7 in Umfangsrichtung positionierenden Beaufschlagungsbereiche 14,15, so dass - ausgehend von einer theoretischen Ruhestellung bzw. Ausgangsstellung, bei der die Beaufschlagungsbereiche 14,15 und 16 in Umfangsrichtung zueinander eine mittige Winkelposition besitzen - eine geringe Verdrehung in beide Drehrichtungen der Schwungmassen 2 und 3 zueinander ohne Federwirkung möglich ist.

In den Figuren 2 und 3 sind die Energiespeicher 7 teilweise komprimiert dargestellt. In der vorerwähnten theoretischen Ruhestellung bzw. Ausgangsstellung decken die durch radiale Arme gebildeten Beaufschlagungsbereiche 16 die Beaufschlagungsbereiche 14 ab, liegen also diesen axial gegenüber, und zwar in einer gegenüber der dargestellten Durchmesserlinie 27 zumindest annähernd mittigen Position.

Bei dem dargestellten Ausführungsbeispiel sind zusätzlich zu den Energiespeichern 7 und einer hier mit Verdrehspiel behafteten Reibeinrichtung 28 weitere Dämpfungsmittel 29 vorhanden, die wenigstens ein Federelement 30 umfassen, das hier als längliches, blattfederartiges Element 30 ausgebildet ist. Bei dem dargestellten Ausführungsbeispiel sind zwei solche blattfederartige Elemente 30 vorgesehen, die diametral gegenüberliegend angeordnet sind. Die blattfederartigen Elemente 30 sind im radial äußeren Bereich der Energiespeicher 7 bzw. des ringförmigen Raumes 21 angeordnet. Ein derartiges blattfederartiges Element 30 besitzt einen mittleren Bereich 31, der radial nach innen hin vorsteht und elastisch verformbar ist, sowie beidseits dieses Bereiches 31 sich in Umfangsrichtung erstreckende Schenkel bzw. Laschen 32, 33. Im radial äußeren Bereich der Kammer 21 ist eine an die Form und Materialstärke eines blattfederartigen Elementes 30 angepasste Aufnahme 34 vorgesehen. Die Aufnahme 34 kann dabei derart ausgestaltet sein, dass das entsprechende blattfederartige Element 30 drehfest oder aber mit Verdrehspiel in der Aufnahme 34 positioniert bzw. geführt ist. Die radial nach innen vorspringenden Bereiche 31 sind bei dem dargestellten Ausführungsbeispiel bogenförmig ausgebildet, könnten jedoch auch eine andere Formgebung aufweisen. Durch entsprechende Formgebung des Bereiches 31 kann das Dämpfungsverhalten der Dämpfungsmittel 29 über den Verdrehwinkel, in dem diese wirksam sind, beeinflusst werden.

Der hier bogenförmige Bereich 31 wirkt mit den radial äußeren Bereichen bzw. der äußeren Mantelfläche 35 der Beaufschlagungsarme 16 zusammen. Bei dem dargestellten Ausführungsbeispiel ist die äußere Mantelfläche 35 kreisbogenförmig ausgebildet. Um die beim Zusammenwirken eines federnden Bereiche 31 mit einer äußeren Mantelfläche 35 erzeugte Reibungsdämpfung an den jeweiligen Einsatzfall anzupassen, kann die Fläche 35 auch anders gestaltet werden. Die miteinander zusammenwirkenden Bereiche bzw. Flächen 31 und 35 können durch entsprechende Ausgestaltung das gewünschte Dämpfungsverhalten gewährleisten. Dabei kann, ausgehend von der bereits definierten mittigen Winkelposition bzw. Ausgangsstellung, in beide Drehsinnrichtungen zwischen den hier durch die Schwungmassen 2 und 3 gebildeten Elementen die gleiche Dämpfungscharakteristik vorhanden sein, oder es können verschiedene Dämpfungscharakteristiken vorgesehen werden. Auch kann über den Verdrehwinkel, in dem die Dämpfungsmittel 29 wirksam sind, mehrfach eine Abund Zunahme der Dämpfungswirkung vorhanden sein. Dies könnte beispielsweise dadurch erfolgen, dass bei dem dargestellten Ausführungsbeispiel zumindest eine der äußeren Mantelflächen der Arme 16 in Umfangsrichtung schlangenlinienartig oder zickzackartig ausgestaltet wird.

In Zusammenhang mit Figur 3 ist erkennbar, dass die Arme 16 bei Drehsinnumkehr sich in Richtung der radial nach innen vorstehenden, hier bogenförmig ausgebildeten Bereiche 31 bewegen, so dass bei Fortsetzung dieser Verdrehung die Bereiche 31 durch die radial äußeren Bereiche der Arme 16 allmählich elastisch verformt werden, wodurch eine Reibungsdämpfung zwischen den radial äußeren Bereichen der Arme 16 und den bogenförmigen Bereichen 31 erzeugt wird. Die Höhe und der Verlauf dieser Reibungsdämpfung kann, wie vorerwähnt, durch entsprechende Ausgestaltung der in Reibeingriff tretenden Flächen bzw. Bereiche an den jeweiligen Einsatzfall angepasst werden.

Obwohl die in Figur 3 auf der linken Seite dargestellte Feder in einer komprimierten Lage dargestellt ist, die der der Figur 2 entspricht, entspannt sich diese Feder zumindest bei niedrigen Drehzahlen, so dass zumindest bei Leerlaufdrehzahl des Motors die Feder 8 in Anlage an dem Arm 16 bleibt, also der Bewegung des Armes folgt.

Durch die Dämpfungsmittel 29 kann verhindert werden, dass zumindest im Leerlaufbetrieb des Motors die Arme 16 zwischen den dann zumindest im Wesentlichen entspannten Federn 8 bzw. Energiespeicher 7 hin- und herpendeln, da gewährleistet wird, dass die durch die Energiespeicher in die mit den Armen 16 verbundenen Trägheitsmassen eingeleitete kinetische Energie durch Reibungsdämpfung zumindest so weit vernichtet wird, dass kein Aufprallen mit hoher Geschwindigkeit der Arme 16 auf das in die andere Drehrichtung wirksame Ende eines Energiespeichers 7 erfolgen kann. Dadurch wird ein Aufschaukeln von Schwingungen verhindert und die damit verbundenen Geräusche zumindest auf ein akzeptables Maß reduziert.

Bei dem dargestellten Ausführungsbeispiel sind die hier in Form von Federelementen 30 vorgesehenen Dämpfungsmittel 29 im radial äußeren Bereich des Raumes 21 angeordnet. Entsprechende Dämpfungsmittel können jedoch auch zumindest auf einer der axialen Seiten eines Armes 16 vorgesehen werden. Auch können diese Dämpfungsmittel 29 anstatt an den den Raum 21 bildenden Bauteilen am flanschartigen Bauteil 20 vorgesehen werden, zum Beispiel seitlich eines Armes 16.

Um den erwünschten Effekt zu erzielen, nämlich praktisch ein Abbremsen von Schwingungen zwischen zwei zueinander verdrehbaren Elementen, können auch andere Mittel als die beschriebenen Verwendung finden. So könnte beispielsweise auch eine magnetische Dämpfung vorhanden sein. Hierfür könnte beispielsweise im Bereich zumindest eines der Beaufschlagungsbereiche 14, 15 ein zum Beispiel durch einen Magnet erzeugtes magnetisches Feld vorgesehen werden, welches während dessen Durchfahrt durch die Arme 16 eine entsprechende Bremswirkung entfaltet. Auch könnte eine hydraulische Dämpfung Anwendung finden.

Wie aus den Figuren entnehmbar ist, erzeugen die Dämpfungsmittel 29 eine Reibungsdämpfung, die nur über einen Teilbereich des durch die Energiespeicher 7 ermöglichten Verdrehwinkels zwischen den beiden Schwungmassen 2 und 3 wirksam ist.

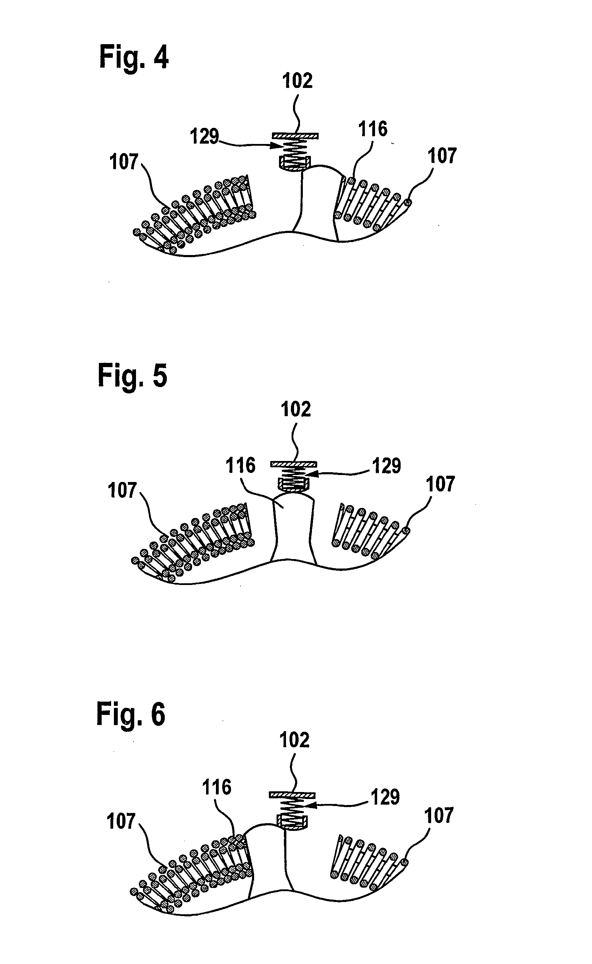

Aus den Figuren 4 bis 6 ist nochmals die prinzipielle Funktionsweise der erfindungsgemäßen Dämpfungsmittel 129 erkennbar. In Figur 4 ist diejenige Position eines Beaufschlagungsarmes 116 dargestellt, bei der dieser gegen das Ende des rechten Energiespeichers 107 schwingt, wodurch dieser Energiespeicher um ein gewisses Maß komprimiert wird. Aufgrund der vorhandenen Drehmoment- bzw. Torsionsschwingungen bewegt sich der Arm 116 in die andere Drehrichtung, wobei diese Bewegung durch die zunächst im Energiespeicher 107 gespeicherte Energie unterstützt bzw. beschleunigt wird. In Verbindung mit Figur 5 ist die Bewegung des Armes 116 in die andere Drehrichtung erkennbar. Der Arm 116 bewegt sich also in Richtung des Endes des linken Energiespeichers 107. Dabei kommen die äußeren Bereiche des Armes 116 in Wirkverbindung mit den Dämpfungsmitteln 129. Dadurch wird die Bewegungsintensität des Armes 116 und der mit diesen verbundenen Massen abgebremst bzw. gedämpft. Die in Figur 5 erkennbare Stellung der Arme 116 in Bezug auf die entspannten Enden der beiden Federn 107 entspricht, zumindest im Wesentlichen, der bereits mehrfach definierten, theoretischen Ruhestellung bzw. Ausgangsstellung zwischen den Elementen 2, 3. Es ist ersichtlich, dass der Arm 116 in beide Drehrichtungen (also sowohl nach rechts als auch nach links) gegenüber den benachbarten Enden der Energiespeicher 107 einen Freiwinkel besitzt. Innerhalb dieses Freiwinkels, in dem die Energiespeicher 107 keine Wirkung entfalten, erfolgt ein Abbremsen des Armes 116 bzw. der mit diesem Arm verbundenen Massen.

Für die Montage und die Funktion des Drehschwingungsdämpfers ist es besonders vorteilhaft, wenn wenigstens eine der Schraubenfedern 8, 9 im entspannten Zustand eine vorgekrümmte Form aufweist. Für die weitaus meisten Fälle wird es zweckmäßig sein, wenn beide Schraubenfedern 8, 9 im entspannten Zustand eine vorgekrümmte Form besitzen, wobei bezogen auf die Längsachse des Energiespeichers 7 beide Schraubenfedern 8, 9 zumindest annähernd den gleichen Krümmungsradius besitzen können. Für einige Anwendungsfälle kann es jedoch auch zweckmäßig sein, wenn zur Spannungsoptimierung im entsprechenden Federdraht der Krümmungsradius wenigstens einer der Federn 8, 9 etwas größer oder etwas kleiner ist als der mittlere Radius, auf dem der Energiespeicher 7 verbaut wird.

Wie aus Figur 2 zu entnehmen ist, besitzt der Energiespeicher 7 bzw. zumindest die Schraubenfeder 8 ein großes Längen-Außendurchmesser-Verhältnis, wodurch große Verdrehwinkel zwischen den beiden Schwungmassen bzw. Schwungradelementen 2, 3 ermöglicht sind.

Die Ausführungsbeispiele sind nicht als Einschränkung der Erfindung zu verstehen.

### Bezugszeichenliste

- 1: geteiltes Schwungrad
- 2: Primärschwungmasse
- 3: Sekundärschwungmasse
- 4: Lagerung
- 5: Bohrungen
- 6: Dämpfungseinrichtung
- 7: Energiespeicher
- 8: Schraubendruckfedern
- 9: Schraubendruckfedern
10
11
12
13
- 14: Beaufschlagungsbereiche
- 15: Beaufschlagungsbereiche
- 16: Beaufschlagungsbereiche
- 17: Blechteile
- 18: Blechteile
- 19: Niete
- 20: Bauteil
- 21: ringförmiger Raum
- 22: torusartiger Bereich
- 23: Ausbuchtungen
- 24: Ausbuchtungen
- 25: Verschleißschutz
- 26: Nabe
- 27: Durchmesserlinie
- 28: Reibeinrichtung
- 29: Dämpfungsmittel
- 30: Federelement
- 31: mittlerer Bereich
- 32: Schenkel bzw. Laschen
- 33: Schenkel bzw. Laschen
- 34: Aufnahme
- 35: äußere Mantelfläche
- 107: Energiespeicher
- 116: Arm
- 129: Dämpfungsmittel

## Patentansprüche

1. Drehmomentübertragungseinrichtung mit zwei zueinander verdrehbaren Elementen (2, 3), zwischen denen ein zumindest Energiespeicher (7) aufweisender Dämpfer vorgesehen ist, wobei die Elemente Beaufschlagungsbereiche (14, 15, 16) aufweisen, mittels derer die Energiespeicher (7) bei einer Relativverdrehung der Elemente (2, 3) aus einer winkelmäßigen Ausgangsposition komprimierbar sin und Dämpfungsmittel (29) zwischen den beiden Elemente (2, 3) vorhanden sind, **dadurch gekennzeichnet, dass** die Dämpfungsmittel unmittelbar bei einer von der winkelmäßigen Ausgangsposition erfolgenden Relativverdrehung der Elemente (2, 3) in wenigstens einem der beiden möglichen Relativverdrehsinne der Elemente (2, 3) eine Dämpfung erzeugen, die nur über einen Teilbereich des in den entsprechenden Relativverdrehsinn durch die Energiespeicher ermöglichten Verdrehwinkels wirksam ist, und die Dämpfungsmittel (29) mit einem der Elemente verbunden sind und mit dem Beaufschlagungsbereich des anderen Elementes zusammenwirken.

2. Drehmomentübertragungseinrichtung nach Anspruch 1, **dadurch gekennzeichnet, dass** bei einer Relativverdrehung zwischen den beiden Elementen (2, 3) aus der Ausgangsposition heraus die Dämpfungswirkung der Dämpfungsmittel (29) abnimmt.

3. Drehmomentübertragungseinrichtung nach Anspruch 1, **dadurch gekennzeichnet, dass** die Dämpfungsmittel (29) zu den Energiespeichern (7) parallel wirksam sind.

4. Drehmomentübertragungseinrichtung nach einem der Ansprüche 1 bis 3, **dadurch gekennzeichnet, dass** die Dämpfungsmittel (29) zumindest teilweise im umfangsmäßigen Erstreckungsbereich der Beaufschlagungsbereiche (14, 15, 16) wenigstens eines der Elemente (2, 3) angeordnet sind.

## Claims

1. Torque transmission device, with two elements (2, 3) which are rotatable with respect to one another and between which a damper having at least energy accumulators (7) is provided, the elements having action-exerting regions (14, 15, 16), by means of which the energy accumulators (7) can be compressed in the event of a relative rotation of the elements (2, 3) out of an initial angular position, and damping means (29) being present between the two elements (2, 3), **characterized in that**, immediately upon a relative rotation of the elements (2, 3) taking place from the initial angular position in at least one of the two possible directions of relative rotation of the elements (2, 3), the damping means generate damping which is active only over a subrange of the angular rotation allowed in the corresponding direction of relative rotation by the energy accumulators, and the damping means (29) are connected to one of the elements and cooperate with the action-exerting region of the other element.

2. Torque transmission device according to Claim 1, **characterized in that**, in the event of a relative rotation between the two elements (2, 3) out of the initial position, the damping action of the damping means (29) decreases.

3. Torque transmission device according to Claim 1, **characterized in that** the damping means (29) are active in parallel with the energy accumulators (7).

4. Torque transmission device according to one of Claims 1 to 3, **characterized in that** the damping means (29) are arranged at least partially in the circumferential range of extent of the action-exerting regions (14, 15, 16) of at least one of the elements (2, 3).

## Revendications

1. Dispositif de transfert de couple comprenant deux éléments (2, 3) pouvant tourner l'un par rapport à l'autre, entre lesquels est prévu un amortisseur présentant au moins des accumulateurs d'énergie (7), les éléments présentant des régions de sollicitation (14, 15, 16) au moyen desquelles les accumulateurs d'énergie (7), lors d'une rotation relative des éléments (2, 3), peuvent être comprimés à partir d'une position de départ angulaire et des moyens d'amortissement (29) étant prévus entre les deux éléments (2, 3), **caractérisé en ce que** les moyens d'amortissement, dans le cas d'une rotation relative des éléments (2, 3) s'effectuant à partir de la position de départ angulaire, produisent immédiatement un amortissement dans au moins l'un des deux sens de rotation relative possibles des éléments (2, 3), cet amortissement n'étant actif que sur une région partielle de l'angle de rotation permis par les accumulateurs d'énergie, dans le sens de rotation relative correspondant, et les moyens d'amortissement (29) sont connectés à l'un des éléments et coopèrent avec la région de sollicitation de l'autre élément.

2. Dispositif de transfert de couple selon la revendication 1, **caractérisé en ce que** dans le cas d'une rotation relative entre les deux éléments (2, 3) à partir de la position de départ, l'effet d'amortissement des moyens d'amortissement (29) diminue.

3. Dispositif de transfert de couple selon la revendication 1, **caractérisé en ce que** les moyens d'amortissement (29) agissent parallèlement aux accumulateurs d'énergie (7).

4. Dispositif de transfert de couple selon l'une quelconque des revendications 1 à 3, **caractérisé en ce que** les moyens d'amortissement (29) sont disposés au moins en partie dans la région d'étendue périphérique des régions de sollicitation (14, 15, 16) d'au moins l'un des éléments (2, 3).
